(19) Europäisches Patentamt / European Patent Office / Office européen des brevets

(11) **EP 3 869 368 A1**

(12) **DEMANDE DE BREVET EUROPEEN**

(43) Date de publication:
**25.08.2021 Bulletin 2021/34**

(51) Int Cl.:
***G06F 21/55*** *(2013.01)*    ***H04L 29/06*** *(2006.01)*

(21) Numéro de dépôt: **21168667.0**

(22) Date de dépôt: **18.07.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2018 FR 1856762**

(62) Numéro(s) de document de la (des) demande(s) initiale(s) en application de l'article 76 CBE:
**19187149.0 / 3 598 330**

(71) Demandeur: **Rockwell Collins France**
**31700 Blagnac (FR)**

(72) Inventeur: **ASSELIN, ERIC**
**31700 BLAGNAC (FR)**

(74) Mandataire: **Cabinet Beau de Loménie**
**158, rue de l'Université**
**75340 Paris Cedex 07 (FR)**

Remarques:
Cette demande a été déposée le 15.04.2021. comme demande divisionnaire de la demande mentionnée sous le code INID 62.

(54) **PROCEDE ET DISPOSITIF DE DETECTION D'ANOMALIE**

(57)    Ce procédé de détection d'anomalie permet de déterminer si un message (MSGEv) à évaluer constitué de symboles et susceptible d'être reçu par une application, constitue une anomalie. Il comporte :
- une étape (F10) d'extraction des N-grammes de ce message à évaluer ;
- une étape (F20) d'attribution d'un score (SC) au message à évaluer (MSGEv) à partir d'un vecteur (VP$_j$) et des N-grammes du message (MSGEv) à évaluer, ce vecteur (VP$_j$) associant à chacun des N-grammes de l'ensemble des messages d'une base d'apprentissage d'une classe de référence, une valeur correspondant à une probabilité d'occurrence de ce N-gramme dans ladite base d'apprentissage, et une valeur par défaut aux N-grammes qui n'appartiennent pas aux messages de la base d'apprentissage ; et
- une étape (F30) de comparaison du score (SC) du message à évaluer (MSGEv) avec un seuil (TH$_j$) du modèle pour décider, si le message à évaluer (MSGEv) est une anomalie.

FIG.4

**Description**

La présente invention se situe dans le domaine général de la détection d'intrusion visant une application susceptible de recevoir des messages. Elle s'applique plus particulièrement à la détection d'intrusion dans des applications aptes à traiter des messages relativement prédictibles.

La mise en œuvre de l'invention nécessite en effet qu'il est possible de constituer un historique des messages normalement attendus par cette application.

L'invention peut en particulier être utilisée pour détecter des intrusions visant un service Web, par exemple offert par une banque.

L'invention peut aussi être utilisée pour détecter une intrusion visant une application embarquée dans un aéronef, par exemple répondant à la norme METAR.

Pour répondre à cette problématique, il est usuel de chercher à détecter si un message reçu par l'application présente une signature représentative d'une intrusion. Mais une telle méthode présente des inconvénients. En l'occurrence elle nécessite de posséder un historique des attaques et de pouvoir mettre à jour la base de données des signatures lorsqu'une nouvelle attaque est détectée.

La deuxième contrainte empêche la mise en œuvre d'une telle solution pour les applications dans lesquelles toute mise à jour requiert un processus de certification de l'application relativement lourd.

L'invention vise donc une méthode de détection d'intrusion qui ne présente pas les inconvénients précités.

Il est usuel qu'une intrusion dans une application se manifeste par l'envoi, à cette application, d'un message normalement non attendu par cette application.

Objet et résumé de l'invention

Selon un premier aspect l'invention vise un procédé de création d'un modèle permettant de détecter si un message à évaluer constitué de symboles et susceptible d'être reçu par une application constitue une anomalie. Ce procédé comporte :

- une étape d'obtention d'un ensemble de messages appartenant à une classe de référence propre à l'application pour constituer une base d'apprentissage ;
- une étape d'identification de l'ensemble des N-grammes des messages de cette base d'apprentissage ;
- une étape de génération d'un vecteur du modèle, ce vecteur associant :

  - à chacun desdits N-grammes, une valeur représentant une probabilité d'occurrence de ce N-gramme dans la base d'apprentissage ; et
  - une valeur par défaut aux N-grammes qui n'appartiennent pas aux messages de la base d'apprentissage ;

- une étape de définition d'une fonction permettant d'attribuer un score à un message à évaluer à partir des valeurs du vecteur associées aux N-grammes du message à évaluer cette fonction étant choisie pour discriminer les scores des anomalies par rapport aux scores des messages normalement attendus en comparant ces scores à un seuil défini pour cette fonction;

le message à évaluer étant considéré ou non comme une anomalie en fonction du résultat de la comparaison du score attribué à ce message avec le seuil précité.

Le procédé de détection d'anomalies selon l'invention est remarquable en ce qu'il n'impose ni de posséder un historique des attaques, ni de créer et maintenir à jour une base de signatures des attaques connues.

Selon un deuxième aspect, l'invention concerne un procédé de détection d'anomalie permettant de déterminer si un message à évaluer constitué de symboles et susceptible d'être reçu par une application, constitue une anomalie. Ce procédé comporte :

- une étape d'extraction des N-grammes de ce message à évaluer ;
- une étape d'attribution d'un score au message à évaluer à partir d'un vecteur et des N-grammes du message à évaluer, ce vecteur associant à chacun des N-grammes de l'ensemble des messages d'une base d'apprentissage d'une classe de référence, une valeur correspondant à une probabilité d'occurrence de ce N-gramme dans la base d'apprentissage, et une valeur par défaut aux N-grammes qui n'appartiennent pas aux messages de la base d'apprentissage, ce score étant attribué par une fonction choisie pour discriminer les scores des anomalies par rapport aux scores des messages normalement attendus par l'application, en comparant ces scores par rapport à un seuil défini pour cette fonction ; et
- une étape de comparaison du score du message à évaluer avec ce seuil pour décider, si le message à évaluer est une anomalie.

Conformément à l'invention, lorsqu'une anomalie est détectée, elle peut être enregistrée ou générer une alerte.

Dans un mode particulier de réalisation, le seuil est défini

- à partir du score le plus faible attribué aux messages de la base d'apprentissage, lorsque la fonction précitée discrimine les scores des anomalies en leur attribuant des valeurs faibles ; ou
- à partir du score le plus fort attribué aux messages de la base d'apprentissage, lorsque cette fonction discrimine les scores des anomalies en leur attribuant des valeurs élevées.

Dans un mode particulier de réalisation, la fonction de score utilise, pour attribuer le score au message à évaluer, une moyenne généralisée d'ordre inférieur à 1 appliquée aux composantes du vecteur correspondant aux N-grammes du message à évaluer.

L'utilisation d'une telle fonction et le choix d'une valeur par défaut permettent avantageusement de discriminer fortement les scores obtenus pour les anomalies et les scores obtenus pour les messages normalement attendus.

Dans un mode de réalisation de l'invention, les N-grammes sont des digrammes.

Dans un mode de réalisation de l'invention, au moins certains des messages de la classe de référence sont des messages ACARS ou une partie de messages ACARS. Ces messages ACARS peuvent éventuellement être encapsulés dans des paquets IP.

Dans un mode de réalisation de l'invention, les applications sont conformes à la norme ARINC.

Dans un mode de réalisation, le procédé de création de modèle selon l'invention comporte une étape préalable de capture des messages de la base d'apprentissage.

Dans un mode particulier de réalisation, l'étape de détermination de la valeur par défaut pour les N-grammes qui n'appartiennent pas aux messages de la base d'apprentissage comporte :

- une boucle au cours de laquelle on fait varier une valeur courante, cette boucle comportant :

  - une étape de détection d'anomalies parmi les messages d'une base de test de la classe de référence, en évaluant si chacun de ces messages constitue une anomalie en utilisant le procédé de détection d'anomalie selon l'invention, après avoir fixé dans le vecteur, la valeur par défaut égale à cette valeur courante ;
  - une étape de détermination d'un taux de faux positifs pour les messages de la base de test pour la valeur courante, à partir du nombre d'anomalies détectées parmi les messages de la base de test ;
  - une étape de détection anomalies parmi des messages non attendus par l'application et compris dans une base de messages n'appartenant pas à la classe de référence, en évaluant si chacun de ces messages constitue une anomalie en utilisant le procédé de détection d'anomalie selon l'invention, après avoir fixé dans le vecteur, la valeur par défaut égale à la valeur courante ;
  - une étape de détermination d'un taux de détection pour les messages non attendus à partir du nombre d'anomalies détectées parmi ces messages non attendus ;

la valeur par défaut étant choisie à partir du taux de faux positif et du taux de détection précités et d'un cadre d'utilisation du procédé.

Dans un autre mode particulier de réalisation, l'étape de détermination de la valeur par défaut pour les N-grammes qui n'appartiennent pas aux messages de la base d'apprentissage comporte :

- une première boucle au cours de laquelle on fait varier une valeur courante, cette première boucle comportant :

  - une étape de détection d'anomalies parmi les messages d'une base de test de la classe de référence, en évaluant si chacun de ces messages constitue une anomalie en utilisant le procédé de détection d'anomalie selon l'invention, après avoir fixé dans le vecteur, la valeur par défaut égale à la valeur courante ;
  - une étape de détermination d'un taux de faux positifs pour les messages de la base de test pour cette valeur courante, à partir du nombre d'anomalies détectées parmi ces messages ;
  - une deuxième boucle au cours de laquelle on fait varier un nombre de mutations, cette deuxième boucle comportant :

    - une étape de génération, à partir de messages de la base de test, et pour chacun de ces messages, d'un message non attendu obtenu en faisant varier le nombre de mutations de symboles dans des N-grammes de ce message ; et
    - une étape de détermination d'un taux de détection pour les messages non attendus ;

- une étape de détermination d'un nombre minimum de mutations pour obtenir un taux de détection de confiance prédéfini ; et
- une étape au cours de laquelle on associe, à chaque valeur courante, un couple comportant le nombre minimum de mutations et le taux de faux positifs ; et

- une étape de sélection d'un de ces couples en fonction d'un cadre d'utilisation du procédé, la valeur par défaut étant choisie à partir de ladite valeur associée à ce couple.

L'invention vise aussi un dispositif de création d'un modèle permettant de détecter si un message à évaluer constitué de symboles susceptible d'être reçu par une application constitue une anomalie. Ce dispositif comporte :

- un module d'obtention d'un ensemble de messages appartenant à une classe de référence propre à l'application pour constituer une base d'apprentissage ;
- un module d'identification de l'ensemble des N-grammes des messages de la base d'apprentissage ;
- un module de génération d'un vecteur du modèle, ce vecteur associant :

  - à chacun desdits N-grammes, une valeur représentant une probabilité d'occurrence du N-gramme dans la base d'apprentissage ; et
  - une valeur par défaut aux N-grammes qui n'appartiennent pas aux messages de la base d'apprentissage ;

ledit dispositif comportant en outre :

- un module de définition d'une fonction permettant d'attribuer un score à un message à évaluer à partir des valeurs du vecteur associées aux N-grammes du message à évaluer, cette fonction étant choisie pour discriminer les scores des anomalies par rapport aux scores des messages normalement attendus en comparant ces scores à un seuil défini pour cette fonction;

le message à évaluer étant considéré ou non comme une anomalie en fonction du résultat de la comparaison dudit score attribué à ce message avec ce seuil.

L'invention vise aussi un dispositif de détection d'anomalie permettant de déterminer si un message à évaluer constitué de symboles et susceptible d'être reçu par une application constitue une anomalie, ce dispositif comportant :

- un module d'extraction des N-grammes de ce message à évaluer ;
- un module d'attribution d'un score au message à évaluer à partir d'un vecteur et des N-grammes du message à évaluer, ce vecteur associant à chacun des N-grammes de l'ensemble des messages d'une base d'apprentissage d'une classe de référence, une probabilité d'occurrence de ce N-gramme dans la base d'apprentissage, et une valeur par défaut aux N-grammes qui n'appartiennent pas aux messages de la base d'apprentissage, le score étant attribué par une fonction choisie pour discriminer les scores des anomalies par rapport aux scores des messages normalement attendus par l'application, en comparant ces scores par rapport à un seuil défini pour cette fonction ; et
- un module de comparaison du score du message à évaluer avec le seuil pour décider si le message à évaluer est une anomalie.

Les avantages et caractéristiques particulières du dispositif de création de modèle et du dispositif de détection d'anomalie sont identiques à ceux des procédés de création de modèle et de détection d'anomalie mentionnés ultérieurement.

Dans un mode particulier de réalisation, les différentes étapes du procédé de création de modèle et/ou du procédé de détection d'anomalie sont déterminées par des instructions de programmes d'ordinateurs.

En conséquence, l'invention vise aussi :

- un programme d'ordinateur sur un support d'information, ce programme étant susceptible d'être mis en œuvre dans un ordinateur, ce programme comportant des instructions adaptées à la mise en œuvre des étapes d'un procédé de création de modèle tel que décrit ci-dessus ;
- un programme d'ordinateur sur un support d'information, ce programme étant susceptible d'être mis en œuvre dans un ordinateur, ce programme comportant des instructions adaptées à la mise en œuvre des étapes d'un procédé de détection d'anomalie tel que décrit ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout symbole limitatif. Sur les figures :

- la figure 1 représente un exemple de message ;
- la figure 2 représente sous forme d'organigramme les principales étapes d'un procédé de création d'un modèle conformément à un mode de réalisation de l'invention ;
- la figure 3 représente un vecteur pouvant être utilisé dans un mode de réalisation de l'invention ;
- la figure 4 représente sous forme d'organigramme les principales étapes d'un procédé de détection d'anomalie conformément à un mode de réalisation de l'invention ;
- la figure 5 représente sous forme d'organigramme les principales étapes d'une première méthode pour déterminer une valeur par défaut conformément à un mode de réalisation de l'invention ;
- la figure 6 représente une courbe de type « ROC curve » connue de l'homme du métier;
- la figure 7 représente sous forme d'organigramme les principales étapes d'une deuxième méthode pour déterminer la valeur par défaut conformément à un mode de réalisation de l'invention ;
- les figures 8-1 à 8-9 illustrent une variation d'un taux de détection en fonction d'un nombre de mutations ;
- la figure 9 illustre une corrélation entre un nombre de mutations et un taux de faux positifs ;
- la figure 10 représente un système dans lequel l'invention peut être mise en oeuvre ;
- la figure 11 représente un dispositif de création de modèle conformément à un mode de réalisation de l'invention ; et
- la figure 12 représente un dispositif de détection d'anomalie conformément à un mode de réalisation de l'invention.
- les figures 13, 14 et 15 illustrent la sensibilité de trois fonctions d'attribution de score

Description détaillée d'un premier mode de réalisation de l'invention

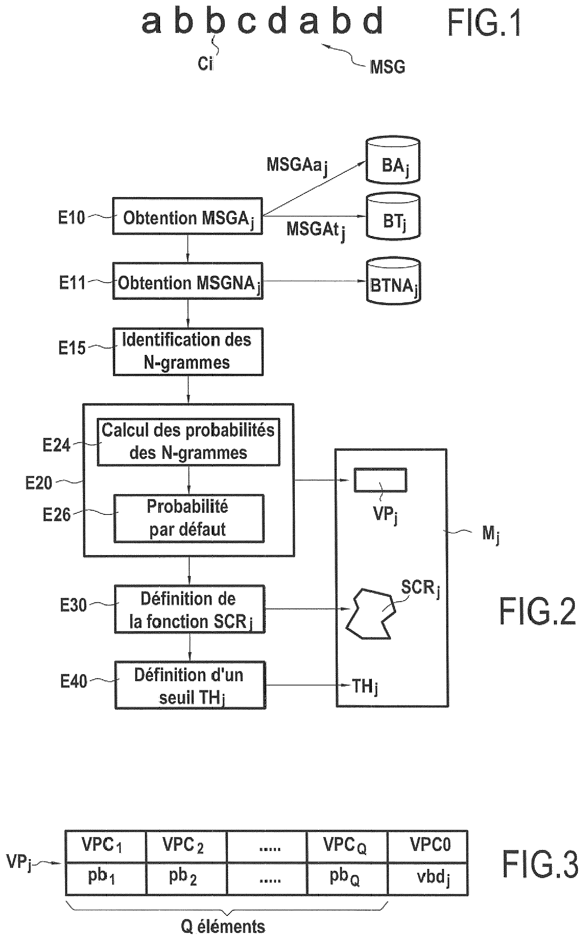

La figure 1 représente un message MSG constitué de symboles $C_i$, à savoir dans cet exemple les symboles « a », « b », « b », « c », « d », « a », « b », et « d ». Ces symboles appartiennent à un alphabet constitué de l'ensemble des symboles susceptibles d'être compris dans un message.

On rappelle qu'un n-gramme du message MSG est une séquence de symboles de longueur n extraite du message MSG.

Par exemple les digrammes (ou n-grammes de longueur 2) de ce message sont les séquences de symboles « ab », « bb », « bc », « cd », « da », « ab », et « bd ».

Dans la suite de la description on considèrera des digrammes, mais l'invention peut être mise en œuvre avec des n-grammes de longueur n quelconque.

La **figure 2** représente sous forme d'organigramme les principales étapes d'un procédé de création d'un modèle $M_j$ permettant de détecter si un message à évaluer constitué de symboles $C_i$ susceptible d'être reçu par une application $AP_j$ embarquée par exemple dans un aéronef constitue une anomalie.

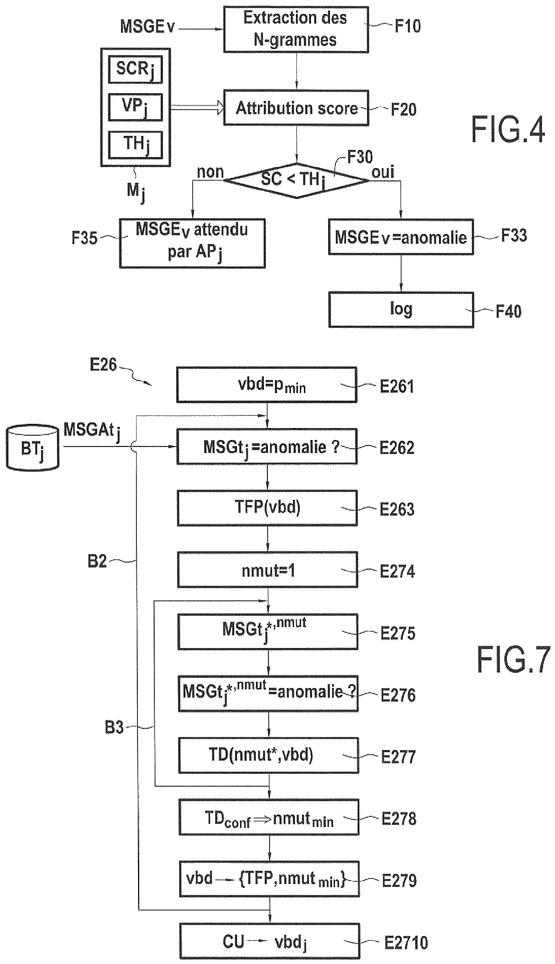

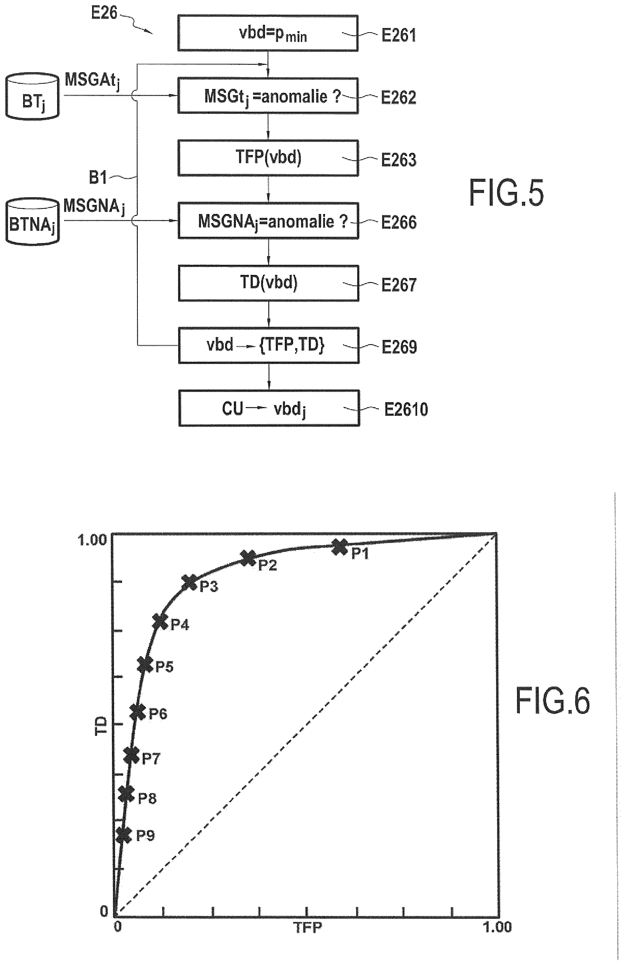

Conformément à l'invention on suppose que l'on dispose d'un ensemble de messages $MSGA_j$ considérés comme normalement attendus par cette application $AP_j$. Dans une première variante qui sera décrite en référence aux figures 5 et 6 on dispose en outre d'un ensemble de message non attendus. Dans une seconde variante qui sera décrite en référence aux figures 7 à 9 on ne dispose que de messages normalement attendus.

Les messages $MSGA_j$ considérés comme normalement attendus par l'application $AP_j$ peuvent avoir été préalablement capturés et constituer tout ou partie d'un historique des messages reçus par l'application $AP_j$. Ils peuvent éventuellement comporter des messages qui ne sont pas effectivement attendus par l'application $AP_j$ mais qui n'ont pas été identifiés comme tels.

Les messages $MSGA_j$ considérés comme normalement attendus par l'application $AP_j$ peuvent être qualifiés

comme appartenant à une même classe de référence $CR_j$ propre à l'application $AP_j$.

Conformément à l'invention, le procédé de création du modèle $M_j$ comporte une étape E10 d'obtention d'un ensemble de messages $MSGA_j$ considérés comme normalement attendus.

Plus précisément, l'ensemble des messages $MSGA_j$ considérés comme normalement attendus par l'application $AP_j$ est divisé en deux sous-ensembles, à savoir en une base d'apprentissage $BA_j$ comportant des messages ci-après référencés $MSGAa_j$ et en une base de test $BT_j$ comportant des messages ci-après référencés $MSGAt_j$.

Dans un mode particulier de réalisation, le procédé comporte une étape E11 qui permet d'obtenir un second ensemble de messages $MSGNA_j$ n'appartenant pas à la classe de référence $CR_j$ propre à l'application $AP_j$ pour constituer une base de test de messages non attendus $BTNA_j$ comportant les messages $MSGNA_j$.

Conformément à l'invention, le procédé de création du modèle $M_j$ comporte une étape E15 d'identification des K digrammes $NG_{k,j}$ des messages $MSGAa_j$ de la base d'apprentissage $BA_j$. Ces digrammes sont notés $NG_{k,j}$ tel que k varie de 1 à K. Cette étape consiste à considérer tous les messages $MSGAa_j$ de la base d'apprentissage $BA_j$ et, pour chacun de ces messages, à identifier l'ensemble des digrammes de ce message comme dans l'exemple décrit précédemment en référence à la figure 1.

En reprenant l'exemple de la figure 1, les digrammes du message MSG sont {« ab », « bb », « bc », « cd », « da », « ab », « bd »}.

Conformément à l'invention, le procédé de création du modèle $M_j$ comporte une étape générale E20 de génération d'un vecteur $VP_j$ associé à ce modèle, dont un exemple est représenté à la figure 3.

Le vecteur $VP_j$ généré par l'invention est un tableau comportant des composantes $VPC_q$ (représentées sur une première ligne du tableau de la Figure 3) représentant les Q digrammes distincts $NG_{q,j}$ de la base d'apprentissage $BA_j$.

Chacune de ces composantes est associée à une composante (représentée sur la deuxième ligne du tableau) dont la valeur représente une probabilité $pb_q$ d'occurrence du digramme correspondant $NG_{q,j}$ (calculée au cours d'une étape E24) dans la base d'apprentissage $BA_j$.

Dans le mode de réalisation décrit ici, la probabilité $pb_q$ d'occurrence d'un digramme $NG_{q,j}$ dans la base d'apprentissage $BA_j$ est calculé en divisant (i) le nombre d'occurrences de ce digramme dans la base $BA_j$ par (ii) le nombre total de digrammes dans la base d'apprentissage.

Dans un mode de réalisation alternatif, la probabilité $pb_q$ peut être calculée sur un échantillon des messages ou des digrammes de la base d'apprentissage.

Toujours en référence à la figure 1, en supposant que la base d'apprentissage ne comporte que le message MSG, cette base d'apprentissage comporterait 7 digrammes, le digramme « ab » ayant deux occurrences, chacun des autres digrammes ayant une seule occurrence. Par conséquent, la probabilité d'occurrence du digramme « ab » est fixée à 2/7 et celle des autres digrammes, « bb », « bc », « cd », « da » et « bd » est fixée à 1/7.

Le vecteur $VP_j$ généré par l'invention associe en outre aux digrammes qui n'appartiennent pas à la base d'apprentissage $BA_j$, une valeur par défaut $vbd_j$ (déterminée au cours d'une étape E26).

Dans le mode de réalisation décrit ici, la même valeur par défaut est associée à tous les digrammes qui n'appartiennent pas à la base d'apprentissage $BA_j$.

Toujours en référence à la figure 1, cette valeur par défaut $vbd_j$ est ainsi attribuée notamment aux digrammes « ba », « cc », « dc », « ae » et « ef » etc...

Ainsi, dans ce mode de réalisation et comme représenté à la figure 3, le vecteur $VP_j$ comporte, en colonne Q+1, une composante VPC0 représentant les digrammes absents de la base d'apprentissage $BA_j$, cette composante étant associée à une composante représentant la valeur par défaut $vbd_j$ fixée à 1/21 dans cet exemple.

Deux méthodes conformes à l'invention pour fixer la valeur par défaut $vbd_j$ seront décrites ultérieurement en référence aux figures 5 à 9.

Conformément à l'invention, le procédé de création d'un modèle $M_j$ comporte une étape E30 de définition d'une fonction $SCR_j$ permettant d'attribuer un score SC à un message MSGEv à évaluer à partir des valeurs du vecteur $VP_j$ (composantes de la deuxième ligne du tableau de la figure 3) associées aux digrammes dudit message à évaluer MSGEv.

Cette fonction SCRj d'attribution d'un score est choisie pour permettre de discriminer les scores des anomalies par rapport aux scores des messages normalement attendus par l'application APj, cette discrimination se faisant en comparant les scores par rapport à un seuil THj défini pour cette fonction.

Dans la suite de la description, on considèrera que les anomalies sont les messages dont les scores attribués par la fonction sont inférieurs au seuil. Mais en variante, il pourrait être considéré que les anomalies sont les messages dont les scores attribués par la fonction sont supérieurs au seuil.

La fonction $SCR_j$ peut par exemple être la moyenne harmonique des valeurs associées dans le vecteur VP aux digrammes du message MSGEv à évaluer. On rappelle que la moyenne harmonique H d'un ensemble de M termes $X_1, ..., X_M$ strictement positifs est :

$$H = M/(1/x_1 + ... + 1/x_M).$$

Par exemple si on applique la fonction SCR$_j$ aux valeurs suivantes :

| 8 | 9 | 9 | 10 | 10 | 10 | 11 | 11 | 12 |
|---|---|---|----|----|----|----|----|----|
| *Ensemble de valeurs* | | | | | | | | |

On obtient avec la moyenne harmonique des valeurs 1 à 9 du tableau un résultat proche de 9.9. On remarque que cette valeur est proche de la moyenne classique (dite moyenne arithmétique) qui est de 10.

Si on applique maintenant la fonction SCR$_j$ à l'ensemble des valeurs précédentes auquel on rajoute la valeur 16, soit environ 6 points au-dessus des moyennes précédentes, on voit que pour la moyenne arithmétique on obtient 10,6 soit une variation de 0,6 ; de même pour la moyenne harmonique on obtient une valeur proche 10,3 soit une variation proche de 0,4. Cet écart montre la sensibilité de la fonction harmonique pour un ensemble de valeurs données.

Si au lieu de rajouter une valeur située environ 6 points au-dessus des moyennes précédentes on rajoute une valeur située environ 6 points en-dessous, c'est-à-dire par exemple la valeur 4, et que l'on applique la fonction SCR$_j$ à ce nouvel ensemble des valeurs on voit que pour la moyenne arithmétique on obtient 9,4 soit une variation en valeur absolue de 0,6 identique à la variation obtenue pour la valeur située 6 points au-dessus. Si on choisit la moyenne harmonique comme fonction SCR$_j$ on obtient une valeur proche de 8,6 soit une variation en valeur absolue proche de 1,3 c'est-à-dire plus de trois fois supérieure à l'écart obtenu précédemment. Ceci illustre le comportement discriminant de la moyenne harmonique envers les faibles valeurs. Toute fonction ayant ce comportement pourra être utilisée comme fonction SCR$_j$ et en particulier toutes les moyennes généralisées d'ordre négatif.

D'autres fonctions d'attribution d'un score peuvent être envisagées, et notamment :

- la fonction :

$$(x_1, ..., x_M) \rightarrow (\ln(avg/x_1) + ... + \ln(avg/x_M)) / M$$
$$avec\ avg = (x_1 + ... + x_M)/M$$

- les moyennes généralisées d'ordre strictement inférieur à 1 :

$$(x_1, ..., x_M) \rightarrow \exp((\log(x_1) + ... + \log(x_M))/M$$

$$(x_1, ..., x_M) \rightarrow ((x_1^{-2} + ... + x_M^{-2})/M)^{-1/2}$$

$$(x_1, ..., x_M) \rightarrow ((x_1^{-3} + ... + x_M^{-3})/M)^{-1/3}$$

Par symétrie on peut également utiliser des fonctions discriminant les valeurs aberrantes situées au-delà de la moyenne. Toutes les moyennes généralisées d'ordre strictement supérieur à 1 (moyennes quadratiques, cubiques ...) peuvent être utilisées comme fonctions d'attribution d'un score et notamment :

$$(x_1, ..., x_M) \rightarrow ((x_1^2 + ... + x_M^2)/M)^{1/2}$$

$$(x_1, ..., x_M) \rightarrow ((x_1^3 + ... + x_M^3)/M)^{1/3}$$

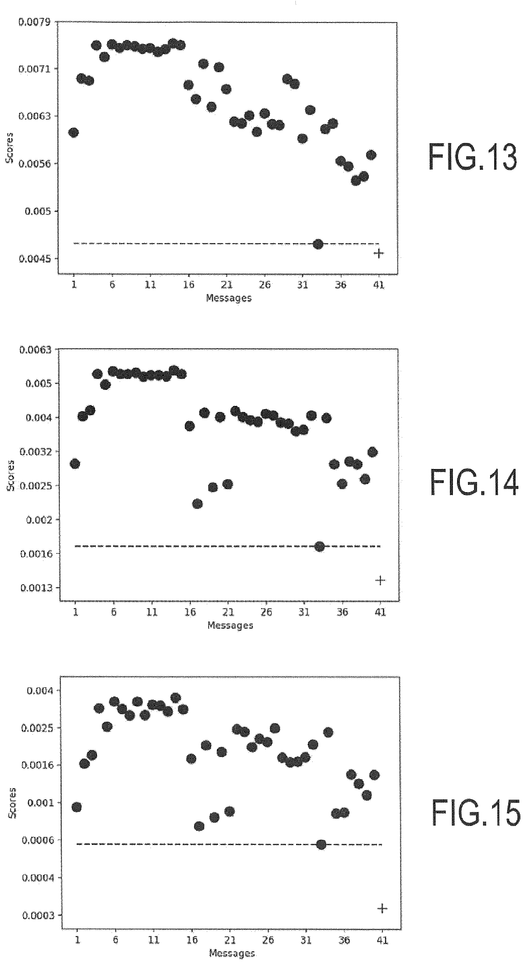

En référence aux figures 13, 14 et 15, la Demanderesse a créé une base d'apprentissage BAj de 40 quarante messages et calculé le score de chacun de ces quarante messages en utilisant respectivement, pour fonction d'attribution du score, une moyenne arithmétique (figure 13), une moyenne géométrique (figure 14) et une moyenne harmonique (figure 15). Sur chacune de ces figures, les points représentent les scores de ces 40 messages et la ligne pointillée le plus petit de ces scores.

La Demanderesse a ensuite calculé le score d'un message à évaluer et représenté ce score de ce message par une croix, ce quarante-et-unième message étant différent des quarante messages de la base d'apprentissage.

Il apparaît sur ces figures que l'écart entre le score du message à évaluer et le plus petit score obtenu pour ceux de la base d'apprentissage est plus important pour la moyenne géométrique que pour la moyenne arithmétique et encore plus important pour la moyenne harmonique. Ceci illustre les sensibilités de ces différentes fonctions d'attribution de score, et par conséquent le fait que parmi ces trois fonctions, la moyenne harmonique est celle qui a le plus de chance de discriminer les anomalies au sens de l'invention.

Conformément à l'invention, le procédé de création d'un modèle $M_j$ comporte une étape E40 de définition d'un seuil $TH_j$.

Si l'on choisit une fonction qui discrimine les valeurs en deçà de la moyenne, ce seuil peut par exemple être défini comme étant le score le plus faible parmi les scores $SCR_j$ des messages $MSGA_j$ de la base d'apprentissage $BA_j$. Si l'on choisit une fonction qui discrimine les valeurs au-delà de la moyenne, ce seuil peut par exemple être défini comme étant le score le plus élevé parmi les scores $SCR_j$ des messages $MSGA_j$ de la base d'apprentissage $BA_j$.

Le procédé de création selon l'invention permet ainsi de créer un modèle $M_j$ comportant un vecteur $VP_j$, une fonction d'attribution de score $SCR_j$, et un seuil $TH_j$.

Un tel modèle $M_j$ constitue un module logiciel destiné à être utilisé dans un procédé et dans un dispositif de détection d'anomalies conformes à l'invention pour détecter si un message à évaluer constitué de symboles $C_i$ constitue une anomalie.

Un procédé de détection conforme à l'invention va maintenant être décrit en référence à la figure 4.

Ce procédé comporte une étape F10 d'extraction des digrammes d'un message MSGEv à évaluer, comme décrit précédemment en référence à la figure 1.

L'étape F10 est suivie par une étape F20 d'attribution d'un score SC au message à évaluer MSGEv. On utilise pour cela la fonction SCRj du modèle $M_j$, qui, attribue ce score à partir du vecteur $VP_j$ du modèle $M_j$ et des digrammes du message MSGEv à évaluer.

Plus précisément, pour chacun des digrammes du message à évaluer, on extrait du vecteur $VP_j$ :

- la valeur $pb_q$ associée à la composante $VPC_q$ si celle-ci est présente dans la première ligne de ce vecteur, autrement dit si ce digramme est compris dans la base d'apprentissage BAj ;
- ou la valeur par défaut $vbd_j$ associée à la composante VPC0 si ce digramme n'est pas compris dans la base d'apprentissage BAj.

Dans ce mode de réalisation le score SC correspond à la moyenne harmonique pondérée qui est le nombre de digrammes extraits divisé par la somme des inverses des dites valeurs extraites.

Par exemple si on choisit la moyenne harmonique H définie précédemment comme fonction $SCR_j$ le score attribué au message MSG de la figure 1, est de 7/(7/2 + 7 + 7 + 7+ 7+ 7/2 + 7), soit 1/6.

En considérant maintenant le message à évaluer « bcc » et la valeur par défaut $vbd_j$ égale à 1/21 cette moyenne harmonique H attribue à ce message le score 2/(7+21) soit 1/14, car ce message comporte deux digrammes, à savoir le digramme « bc » de probabilité 1/7 et le digramme « cc » de valeur par défaut 1/21.

Le procédé de détection selon l'invention détermine si le message à évaluer MSGEv constitue une anomalie en comparant, au cours d'une étape F30, le score SC au seuil $TH_j$ du modèle $M_j$. Dans l'exemple de la figure 4, on considère que le message à évaluer est une anomalie (étape F33) si le score SC est strictement inférieur à ce seuil THj.

Sinon, on considère (étape F35) que le message à évaluer MSGEv est un message normalement attendu par l'application APj.

Dans le mode de réalisation décrit ici, une anomalie détectée à l'étape F30 est enregistrée dans un journal à l'étape F40.

Première variante de calcul de la valeur par défaut $vbd_j$

En référence à la figure 5, nous allons maintenant décrire une première méthode utilisant les courbes ROC connues de l'homme du métier et conforme à l'invention pour obtenir la valeur par défaut à attribuer, dans le vecteur $VP_j$, aux digrammes qui ne sont pas présents dans la base d'apprentissage $BA_j$. Cette figure illustre un premier mode de réalisation de l'étape E26.

Ce mode de réalisation de l'invention peut être mis en œuvre si l'on dispose, en plus d'ensemble de messages considérés comme normalement attendus, d'un ensemble de messages $MSGNA_j$ considérés comme non attendus par ladite application $AP_j$ qui peuvent avoir été préalablement capturés (typiquement par la mise en œuvre de l'étape E11 déjà décrite) et constituer tout ou partie d'un historique des messages reçus par l'application $AP_j$.

Cette méthode comporte une étape E261 d'initialisation d'une valeur courante vbd à une valeur minimum prédéterminée $p_{min}$ et une première boucle B1 au cours de laquelle on fait varier la valeur courante vbd, selon un pas prédéterminé dans cet exemple, ainsi qu'une étape E2610. La boucle B1 comportant des étapes E262, E263, E266, E267 et E269.

Au cours de l'étape E262, on applique le procédé de détection décrit en référence à la figure 4 aux messages MSGAt$_j$ de la base de test BTj pour déterminer si ces messages constituent ou non une anomalie. On utilise au cours de cette étape la fonction SCRj du modèle Mj après avoir fixé, dans ledit vecteur VPj, la valeur par défaut vbd$_j$ égale à la valeur courante vbd.

Les messages MSGAt$_j$ de la base de test sont par nature considérés comme étant attendus par l'application AP$_j$. Autrement dit, les messages détectés comme des anomalies au cours de l'étape E262, constituent des faux positifs.

On détermine ainsi, au cours d'une étape E263 un taux TFP de faux positifs pour les messages MSGAt$_j$ de la base de test BT$_j$ pour la valeur courante vbd. Ce taux est le ratio entre le nombre de messages détectés comme des anomalies et le nombre de messages de la base de test.

Au cours d'une étape E266 on applique le procédé de détection déjà décrit en référence à la figure 4 aux messages MSGNA$_j$ pour déterminer si ces messages constituent ou non une anomalie. On utilise au cours de cette étape la fonction SCRj du modèle Mj après avoir fixé, dans ledit vecteur VPj, la valeur par défaut vbd$_j$ égale à la valeur courante vbd.

Les messages MSGNA$_j$ sont par nature considérés comme non attendus par l'application APj et devraient donc être détectés comme des anomalies. Si une anomalie est détectée au cours de l'étape E266, elle constitue un vrai positif.

Au cours d'une étape E267, on détermine le taux TD de détection pour la valeur courante vbd. Ce taux est le ratio du nombre de messages détectés comme des anomalies et le nombre de messages de la base de test des messages non attendus BTNA$_j$.

Dans ce mode de réalisation, au cours d'une étape E269, on constitue un couple que l'on associe à la valeur courante de vbd, et que l'on représente, dans le repère illustré à la Figure 6, par un point Pi dont l'abscisse correspond au taux de faux positif TFP calculé à l'étape E263 et dont l'ordonnée correspond au taux de détection TD calculé à l'étape E267.

Cette première méthode permet de tracer, à partir de ces points, une courbe connue de l'homme du métier sous le nom de courbe ROC.

On choisit ensuite la valeur par défaut vbd$_j$ à attribuer dans le vecteur VP$_j$ du modèle M$_j$ aux digrammes non présents dans la base d'apprentissage BAj à partir des taux TFP, TD calculés au cours des différentes itérations de la boucle B1 et d'un cadre d'utilisation CU de l'invention.

Plus précisément, dans ce mode de réalisation de l'invention, on peut sélectionner (étape E2610) un des couples constitué au cours d'une occurrence de l'étape E269 de l'invention et relever la valeur vbd associée à ce couple pour constituer la valeur par défaut vbd$_j$

On peut également choisir un point de la courbe de la figure 6 et calculer par interpolation la valeur vbd associée à ce point.

De manière connue de l'homme de l'art, le cadre d'utilisation CU (web, communication avionique) impose des contraintes sur le compromis entre le taux de faux positifs TFP et la capacité du modèle à détecter une anomalie c'est-à-dire le taux de détection TD.

La courbe de la figure 6 représente une évaluation de ce compromis entre le taux de faux positifs TFP et la capacité à détecter un message non attendu comme une anomalie du modèle Mj.

Deuxième variante de calcul de la valeur par défaut vbd$_j$

En référence à la figure 7, nous allons maintenant décrire une seconde méthode conforme à l'invention pour obtenir la valeur par défaut vbd$_j$ à associer, dans le vecteur VP$_j$, aux digrammes qui ne sont pas présents dans la base d'apprentissage BA$_j$. Cette figure illustre ainsi un mode de réalisation de l'étape E26.

Cette variante peut être utilisée lorsque l'on ne possède pas d'historique ou pas un historique suffisant de messages non attendus par l'application APj. Dans ce mode de réalisation, l'étape E11 décrite précédemment en référence à la figure 1 n'est pas mise en œuvre.

Cette méthode comporte des étapes E261, E262 et E263 identiques à celles décrites en référence à la figure 5.

Au cours de l'étape E261, et comme déjà décrit en référence à la figure 5, on initialise une valeur courante vbd à une valeur minimum prédéterminée p$_{min}$.

Cette méthode comporte une première boucle B2 (similaire à la boucle B1 décrite en référence à la figure 5) au cours de laquelle on fait varier la valeur courante vbd, selon un pas prédéterminé dans cet exemple, ainsi qu'une étape E2710. La boucle B2 comporte les étapes E262 et E263 déjà décrites, une étape E274, une boucle B3, une étape E278 et une étape E279.

Au cours de l'étape E262, et comme décrit en référence à la figure 5, on applique le procédé de détection décrit en référence à la figure 4 aux messages MSGAt$_j$ de la base de test BTj pour déterminer si ces messages constituent ou non une anomalie. Les messages détectés comme des anomalies au cours de l'étape E262, constituent des faux positifs, et, au cours de l'étape E263 on détermine un taux TFP de faux positifs pour les messages MSGt$_j$ de la base

de test BT$_j$ pour la valeur courante vbd.

La boucle B3 comporte une étape E275, une étape E276 et une étape E277.

Au cours d'une étape E274, on initialise un nombre de mutations nmut, la boucle B3 étant conçue pour faire varier à chaque itération ce nombre de mutations. Dans l'exemple de la figure 7, l'étape E274 initialise nmut à 1 et la boucle B3 incrémente ce nombre de mutations d'une unité.

Au cours d'une étape E275 on génère pour chacun des messages de la base de test, un message non attendu MSGt$_j$$^{*,nmut}$ en faisant varier un nombre nmut de mutations de symboles Ci dans les digrammes de ce message MSGt$_j$ de la base de test BT$_j$. Autrement dit, toujours dans cet exemple, à la p$^{ième}$ itération de la boucle B3, chaque message non attendu présente exactement p digrammes dont un symbole a été muté par rapport à un message de la base de test.

Au cours d'une étape E276, on applique le procédé de détection décrit en référence à la figure 4 aux messages non attendus MSGt$_j$$^{*,nmut}$ pour déterminer si ces messages sont détectés ou non comme des anomalies. On utilise au cours de cette étape la fonction SCRj du modèle Mj après avoir fixé, dans ledit vecteur VPj, la valeur par défaut égale à la valeur courante vbd.

Les messages MSGt$_t$$^{*,nmut}$ sont construits pour être détectés comme des anomalies. Si une anomalie est détectée au cours de l'étape E276, elle constitue un vrai positif.

On détermine ainsi, au cours d'une étape E277, un taux TD de détection pour des messages ayant subi nmut mutations et pour la valeur courante vbd. Ce taux est le ratio entre le nombre de messages détectés comme des anomalies et le nombre de messages de la base de test ayant été mutés. Cette étape E277 termine la boucle B3.

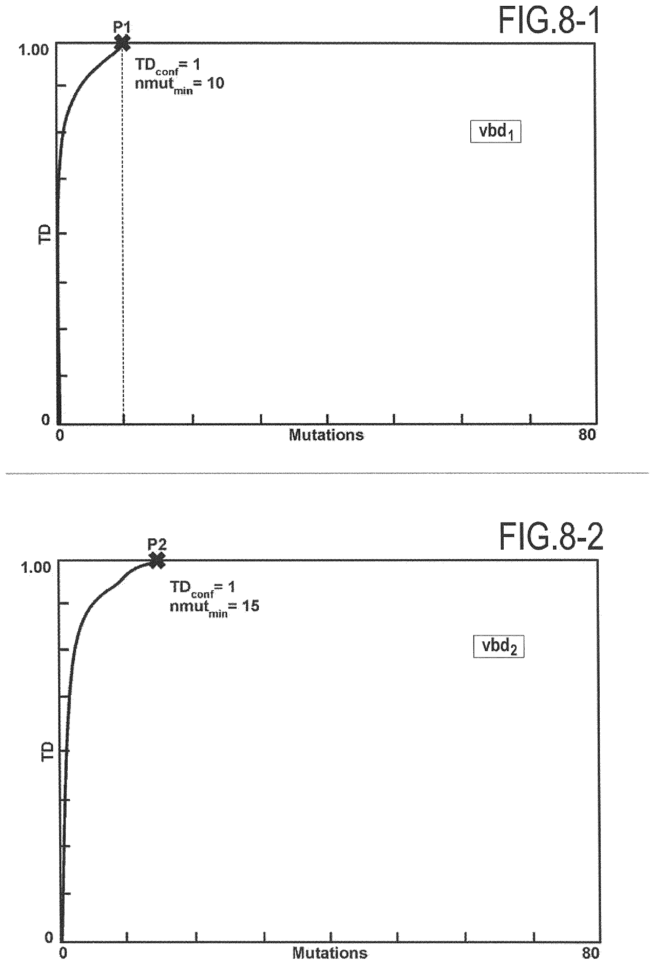

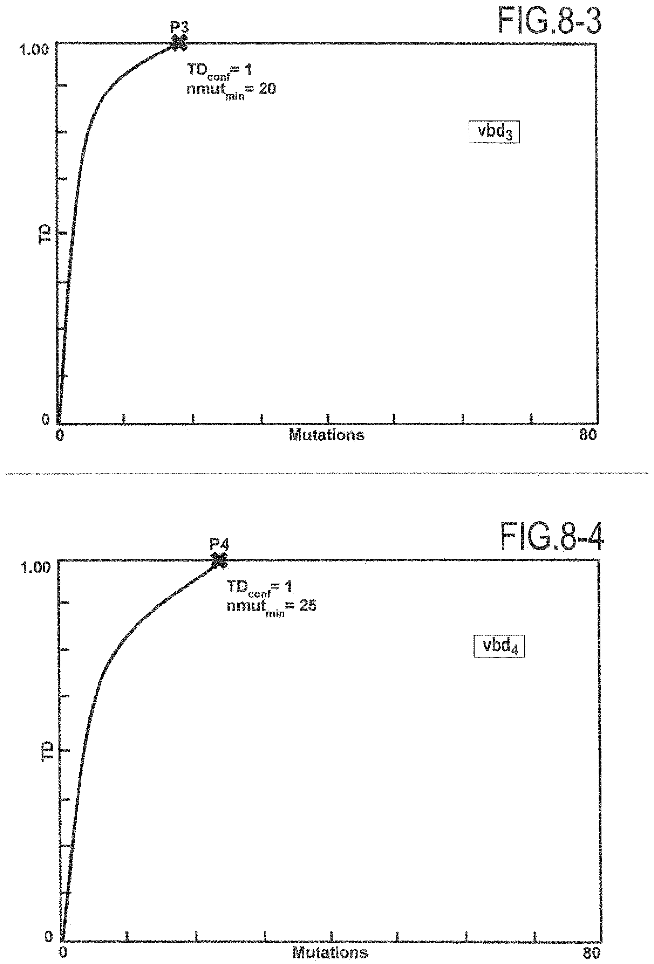

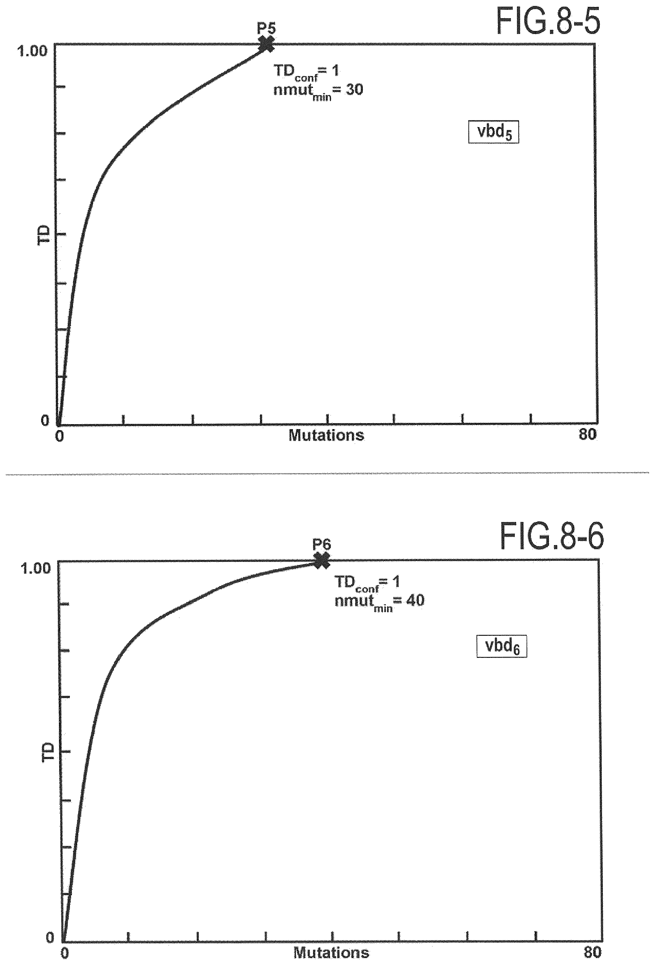

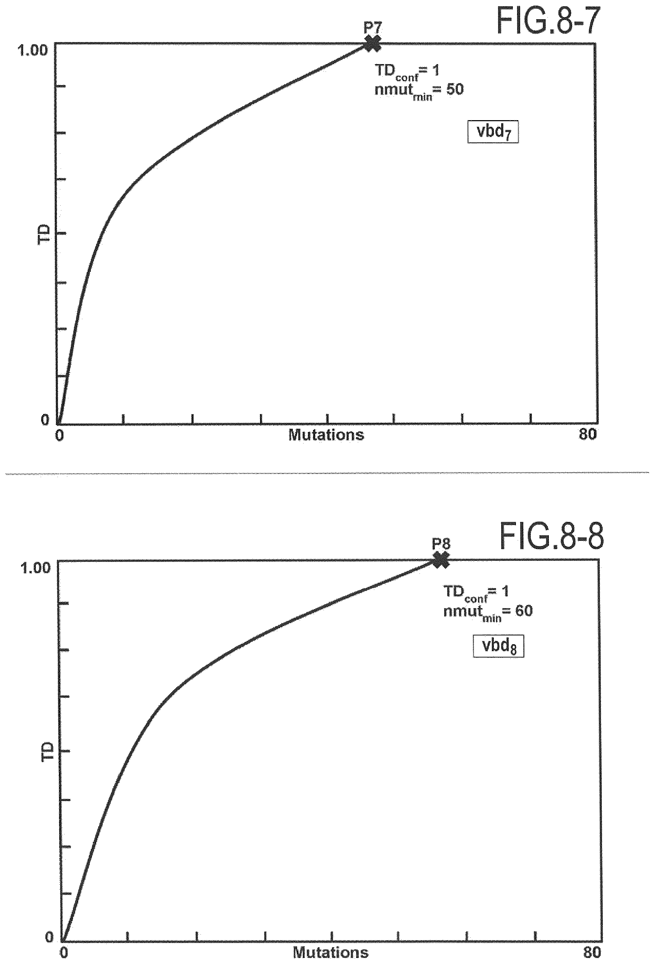

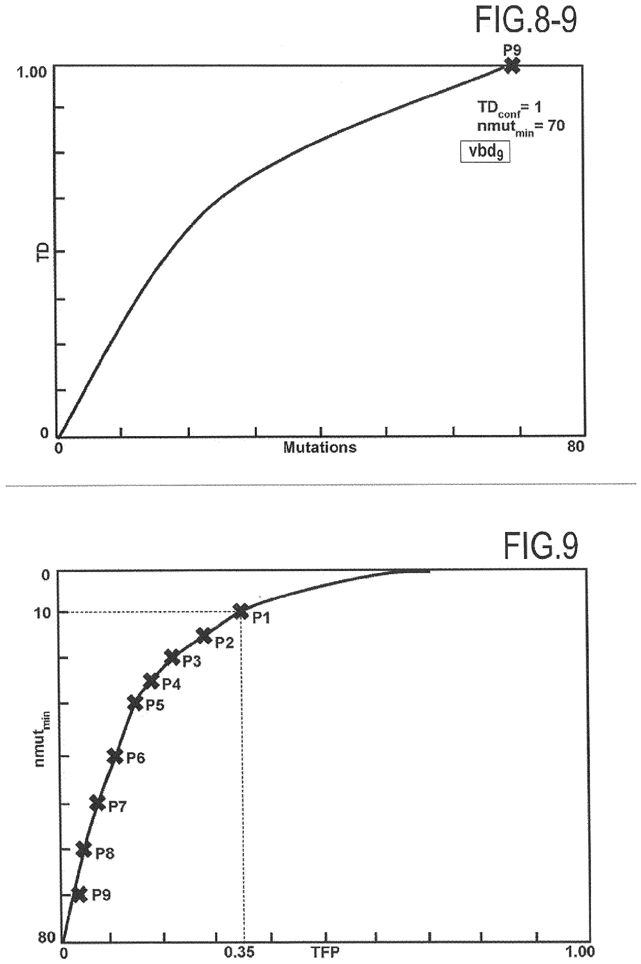

Les figures 8-1 à 8-9 illustrent, pour 9 valeurs de la valeur courante vbd notées vbd1 à vbd9, la variation du taux de détection TD en fonction du nombre nmut de mutations

Au cours d'une étape E278, on détermine un nombre nmut$_{min}$ minimum de mutations pour obtenir un taux de détection TD$_{conf}$ de confiance prédéfini en fonction d'un cadre d'utilisation CU de l'invention décrit à l'étape E2710.

Par exemple, si on choisit un taux de confiance TD$_{conf}$ prédéfini de 1, on obtient, à partir des 9 courbes des figures 8-1 à 8-9, les nombres nmut$_{min}$ minimum de mutations suivants :

*Nombre minimum de mutations pour un taux de confiance TD$_{conf}$ de 1.*

|  | vbd1 | vbd2 | vbd3 | vbd4 | vbd5 | vbd6 | vbd7 | vbd8 | vbd9 |
|---|---|---|---|---|---|---|---|---|---|
| nmut$_{min}$ | 10 | 15 | 20 | 25 | 30 | 40 | 50 | 60 | 70 |

Au cours d'une étape E279, on associe, à la valeur courante vbd, un couple comportant ledit nombre nmut$_{min}$ minimum de mutations déterminé à l'étape E278 et le taux de faux positifs TFP calculé à l'étape E263. Cette étape termine la boucle B1.

Chaque couple permet de représenter un point sur le diagramme de la figure 9.

*Evolution du taux de faux positifs en fonction du nombre minimum de mutations pour un taux de confiance TD$_{conf}$ de 1.*

|  | vbd1 | vbd2 | vbd3 | vbd4 | vbd5 | vbd6 | vbd7 | vbd8 | vbd9 |
|---|---|---|---|---|---|---|---|---|---|
| nmut$_{min}$ | 10 | 15 | 20 | 25 | 30 | 40 | 50 | 60 | 70 |
| TFP | 0.35 | 0.28 | 0.22 | 0.18 | 0.15 | 0.11 | 0.08 | 0.05 | 0.03 |

Dans ce mode de réalisation de l'invention, on sélectionne au cours d'une étape E2710 un couple constitué au cours d'une occurrence de l'étape E279 en fonction d'un cadre d'utilisation CU de l'invention et on affecte la valeur vbd associée à ce couple à la valeur par défaut vbd$_j$ à attribuer dans le vecteur VP$_j$ du modèle M$_j$ aux digrammes non présents dans la base d'apprentissage BA$_j$.

La valeur par défaut vbd$_j$ peut également être déterminée par interpolation à partir de plusieurs couples. Cette opération revient par exemple à déterminer un point de la courbe de la figure 9 placé entre deux points voisins Pi, Pi+1 de cette courbe, et à déterminer la valeur vbdj par interpolation entre les valeus vbdi, vbdi+1 associées à ces couples.

Le cadre d'utilisation (web, communication avionique) impose des contraintes sur le taux de faux positifs TFP et sur la capacité du modèle à détecter une anomalie (TD) comme déjà décrit en référence à la figure 5. Dans cette deuxième variante cette capacité de détection est représentée par le nombre minimum de mutations. La valeur vbd$_j$ associée au couple garantit par construction, pour un taux accepté de faux positif, qu'un message sera détecté comme une anomalie dans les limites du taux de confiance TD$_{conf}$ fixé à l'étape E278, dès lors que ce message comporte au moins nmut$_{min}$ digrammes inconnus.

Les messages comportant moins de nmut$_{min}$ digrammes inconnus peuvent aussi être détectés, mais le procédé ne le garantit pas.

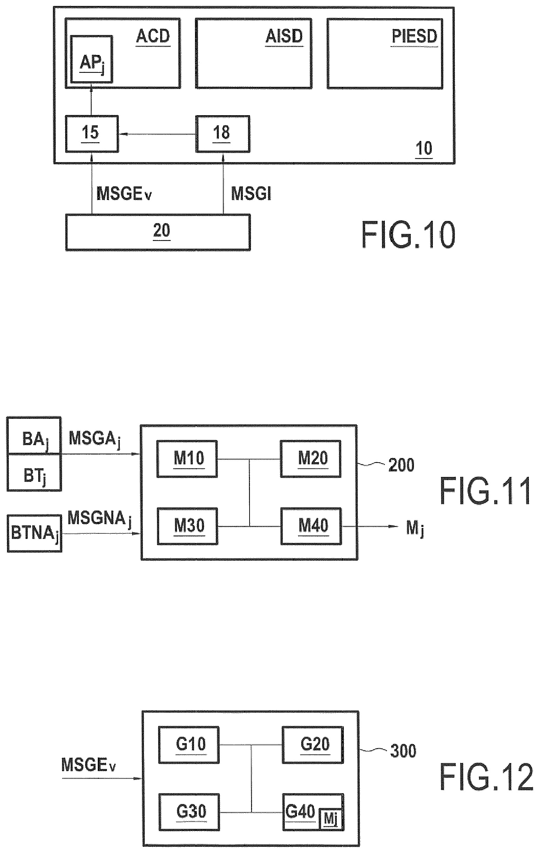

La figure 10 représente un système dans lequel l'invention peut être mise en œuvre, dans le contexte d'un aéronef.

On rappelle que dans un aéronef 10, un certain nombre d'applications APj communiquent avec des équipements 20 au sol.

Dans le domaine de l'avionique, il est usuel de considérer trois principaux domaines définis notamment selon un niveau de criticité, à savoir le domaine ACD (Aircraft Control Domain) très critique qui permet de contrôler l'avion, le domaine AISD (Airline Information System Domain, et le domaine de moindre criticité PIESD (Passenger Information and Entertainement Domain).

L'invention peut en particulier être utilisée pour détecter si un message destiné à une application embarquée APj dans l'aéronef 10 constitue une anomalie.

Dans ce mode de réalisation, les messages au sens de l'invention pourraient être la charge utile (en anglais « Payload ») de messages de type ACARS destinée aux applications $AP_j$. On rappelle que ces charges utiles reçues du sol dans des messages MSGA de type ACARS et sont aiguillées vers l'application par un routeur 15 embarqué dans l'aéronef en fonction d'un label compris dans l'en-tête de ce message.

Ces messages ACARS pourraient éventuellement être encapsulés dans des paquets IP MSGI et transmis à l'application APj via une passerelle 18 du domaine AISD.

En pratique, le procédé de création du modèle peut-être mis en œuvre dans un équipement au sol. Il permet de construire un modèle (vecteur, fonction d'attribution d'un score, seuil), pour une application embarquée donnée, à partir d'un historique de messages reçus par cette application et classifiés en message effectivement attendu et messages non attendus par cette application.

L'invention ne nécessite pas de connaître la nature des anomalies mais lorsqu'on possède aussi un historique d'anomalies, cet historique peut être utilisé comme décrit précédemment en référence à la figure 5 pour déterminer la valeur par défaut à attribuer dans le vecteur aux digrammes non présents dans la base d'apprentissage.

La figure 11 représente un dispositif 200 de création d'un modèle conforme à l'invention.

Ce dispositif comporte un module M10 apte à obtenir un ensemble de messages $MSGA_j$ compris dans une base d'apprentissage BAj et dans une base de test $BT_j$, optionnellement un second ensemble de messages $MSGNA_j$ compris dans une base $BTNA_j$, un module M20 d'identification de l'ensemble des digrammes des messages, et apte à générer un vecteur $VP_j$ tel que décrit précédemment, un module M30 permettant de définir une fonction $SCR_j$ permettant d'attribuer un score SC à un message $MSGEv$ à évaluer et de définir un seuil $TH_j$, et un module M40 apte à restituer un modèle $M_j$ comportant le vecteur $VP_j$, la fonction SCRj et le seuil THj sous forme de module logiciel.

En pratique le dispositif peut être incorporé dans un ordinateur. Le module M10 est un module de communication apte à recevoir les messages $MSGA_j$, $MSGNA_j$ via un réseau ou un module de lecture d'un support comportant ces messages tel que les bases de données $BA_j$ et $BTNA_j$.

Le module M20 peut être un programme informatique exécutable par un processeur et comportant des instructions pour extraire les différents digrammes et calculer les différentes probabilités. Le module M30 permet de définir la fonction d'attribution d'un score et le seuil. Le module M40 peut être constitué par un outil permettant de générer un objet informatique comportant un ou plusieurs modèle $M_j$ par exemple sous forme de librairie.

Le procédé de détection d'anomalie peut être mis en œuvre soit dans l'aéronef en amont de l'application à protéger, par exemple dans le routeur 15, dans la passerelle 18, ou au sol.

La figure 12 représente un dispositif 300 de détection d'anomalie conforme à l'invention et permettant de déterminer si un message MSGEv à évaluer constitue une anomalie. Il comporte un module G10 d'extraction des digrammes d'un message, un module G20 d'attribution d'un score SC au message à évaluer en utilisant le modèle $M_j$, et un module G30 de comparaison du score SC du message à évaluer MSGEv avec un seuil $TH_j$ du modèle pour décider, si le message à évaluer MSGEv est une anomalie.

Les différents modules G10, G20, G30 peuvent être des modules logiciels exécutables par un processeur du dispositif. Ce dispositif comporte une mémoire G40 dans laquelle sont mémorisés le ou les modèles Mj générés par le dispositif 200.

## Revendications

1. Procédé de création d'un modèle ($M_j$) permettant de détecter si un message à évaluer (MSGEv) constitué de symboles ($C_i$) susceptible d'être reçu par une application ($AP_j$) constitue une anomalie, ce procédé comportant :

   - une étape (E10) d'obtention d'un ensemble de messages ($MSGAa_j$) appartenant à une classe de référence ($CR_j$) propre à l'application ($AP_j$) pour constituer une base d'apprentissage ($BA_j$) ;
   - une étape (E15) d'identification de l'ensemble des N-grammes ($NG_{k,j}$) des messages ($MSGAa_j$) de la base d'apprentissage (BAj) ;

- une étape (E20) de génération d'un vecteur (VP$_j$) du modèle (M$_j$), ce vecteur (VPj) associant :

- à chacun desdits N-grammes, une valeur représentant une probabilité (pb$_{k,j}$) d'occurrence dudit N-gramme (NG$_{k,j}$) dans la base d'apprentissage (BA$_j$) ; et
- une valeur (vbd$_j$) par défaut aux N-grammes (NG) qui n'appartiennent pas aux messages (MSGAa$_j$) de la base d'apprentissage (BA$_j$) ;

ledit procédé comportant en outre :

- une étape (E30, E40) de définition d'une fonction (SCR$_j$) permettant d'attribuer un score (SC) à un message (MSGEv) à évaluer à partir des valeurs du vecteur (VPj) associées aux N-grammes dudit message à évaluer (MSGEv), cette fonction étant choisie pour discriminer les scores des anomalies par rapport aux scores des messages normalement attendus en comparant ces scores à un seuil (TH$_j$) défini (E40) pour cette fonction;

ledit message (MSGEv) à évaluer étant considéré ou non comme une anomalie en fonction du résultat de la comparaison dudit score (SC) attribué à ce message avec ledit seuil (TH$_j$), ledit procédé étant **caractérisé en ce que** la fonction (SCR$_j$) utilise, pour attribuer ledit score (SC) audit message à évaluer, une moyenne généralisée d'ordre inférieur à 1 appliquée aux composantes du vecteur (VPj) correspondant aux N-grammes de ce message à évaluer (MSGEv).

2. Procédé selon la revendication 1 dans lequel les N-grammes sont des digrammes.

3. Procédé selon l'une quelconque des revendications 1 à 2 dans lequel au moins certains desdits messages (MSGAa$_j$) de la classe de référence sont des messages ACARS ou une partie de messages ACARS.

4. Procédé selon la revendication 3 dans lequel lesdits messages ACARS sont encapsulés dans des paquets IP.

5. Procédé selon l'une quelconque des revendications 1 à 4 dans lequel ladite application (AP$_j$) est conforme à la norme ARINC.

6. Procédé selon l'une quelconque des revendications 1 à 5 dans lequel ladite étape (E26) de détermination de la valeur par défaut (vbd$_j$) pour les N-grammes (NG) qui n'appartiennent pas aux messages (MSGAa$_j$) de la base d'apprentissage (BA$_j$) comporte :

- une boucle (B1) au cours de laquelle on fait varier une valeur courante (vbd), la boucle comportant :

- une étape (E262) de détection d'anomalies parmi les messages (MSGAt$_j$) d'une base de test (BT$_j$) de la classe de référence (CR$_j$), évaluant si chacun de ces messages constitue une anomalie en utilisant le procédé de détection d'anomalie de la revendication 10 ou 11, après avoir fixé dans ledit vecteur (VPj), ladite valeur par défaut (vbd$_j$) égale à ladite valeur courante (vbd) ;
- une étape (E263) de détermination d'un taux (TFP) de faux positifs pour les messages (MSGAt$_j$) de la base de test (BT$_j$) pour ladite valeur courante, à partir du nombre d'anomalies détectées parmi les messages (MSGAt$_j$) de la base de test (BT$_j$) ;
- une étape (E266) de détection anomalies parmi des messages (MSGNA$_j$) non attendus par ladite application et compris dans une base (BTNA$_j$) de messages n'appartenant pas à ladite classe de référence (CR$_j$), évaluant si chacun de ces messages constitue une anomalie en utilisant le procédé de détection d'anomalie de la revendication 10 ou 11 après avoir fixé dans ledit vecteur (VPj) ladite valeur par défaut (vbd$_j$) égale à ladite valeur courante (vbd) ;
- une étape (E267) de détermination d'un taux (TD) de détection pour lesdits messages non attendus (MSGNA$_j$), à partir du nombre d'anomalies détectées parmi ces messages non attendus (MSGNA$_j$) ;

ladite valeur par défaut (vbd$_j$) étant choisie (E269, E2610) à partir desdits taux (TFP, TD) et d'un cadre d'utilisation (CU) dudit procédé.

7. Procédé selon l'une quelconque des revendications 1 à 5 dans lequel ladite étape (E26) de la détermination de la valeur par défaut (vbd$_j$) pour les N-grammes (NG) qui n'appartiennent pas aux messages (MSGAa$_j$) de la base d'apprentissage (BA$_j$) comporte :

- une première boucle (B2) au cours de laquelle on fait varier une valeur courante (vbd), cette première boucle comportant :

- une étape (E262) de détection d'anomalies parmi les messages (MSGAt$_j$) d'une base de test (BT$_j$) de la classe de référence (CR$_j$), évaluant si chacun de ces messages constitue une anomalie en utilisant le procédé de détection d'anomalie de la revendication 10 ou 11, après avoir fixé dans ledit vecteur (VPj), ladite valeur par défaut (vbd$_j$) égale à ladite valeur courante (vbd) ;
- une étape (E263) de détermination d'un taux (TFP) de faux positifs pour les messages (MSGAt$_j$) de la base de test (BT$_j$) pour ladite valeur courante, à partir du nombre d'anomalies détectées parmi ces messages ;
- une deuxième boucle (B3) au cours de laquelle on fait varier un nombre de mutations (nmut), cette deuxième boucle comportant :

- une étape (E275) de génération, à partir de messages de la base de test (BT$_j$), et pour chacun (MSGAt$_j$) de ces messages, d'un message non attendu (MSGt$_j^{*,nmut}$) obtenu en faisant varier le nombre (nmut) de mutations de symboles (Ci) dans des N-grammes de ce message (MSGAt$_j$) ; et
- une étape (E276, E277) de détermination d'un taux (TD) de détection pour lesdits messages non attendus (MSGt$_j^{*,nmut}$) ;

- une étape (E278) de détermination d'un nombre (nmut$_{min}$) minimum de mutations pour obtenir un taux de détection (TD$_{conf}$) de confiance prédéfini ; et
- une étape (E279) au cours de laquelle on associe, à chaque dite valeur courante (vbd), un couple comportant ledit nombre (nmut$_{min}$) minimum de mutations et ledit taux de faux positifs (TFP) ; et

- une étape de sélection d'un dit couple en fonction d'un cadre d'utilisation (CU) dudit procédé, ladite valeur par défaut (vbd$_j$) étant choisie (E279) à partir de ladite valeur (vbd) associée audit couple.

8. Procédé de détection d'anomalie permettant de déterminer si un message (MSGEv) à évaluer constitué de symboles (Ci) et susceptible d'être reçu par une application (AP$_j$), constitue une anomalie, ce procédé comportant :

- une étape (F10) d'extraction des N-grammes (NG$_K$) de ce message à évaluer ;
- une étape (F20) d'attribution d'un score (SC) au message à évaluer (MSGEv) à partir d'un vecteur (VP$_j$) et des N-grammes du message (MSGEv) à évaluer, ce vecteur (VP$_j$) associant à chacun des N-grammes de l'ensemble des messages (MSGAa$_j$) d'une base d'apprentissage (BA$_j$) d'une classe de référence (CR$_j$), une valeur correspondant à une probabilité d'occurrence de ce N-gramme dans ladite base d'apprentissage, et une valeur par défaut (vbd$_j$) aux N-grammes qui n'appartiennent pas aux messages (MSGAa$_j$) de la base d'apprentissage (BA$_j$), ledit score (SC) étant attribué par une fonction choisie pour discriminer les scores des anomalies par rapport aux scores des messages normalement attendus par ladite application, en comparant ces scores par rapport à un seuil (TH$_j$) défini pour cette fonction ; et
- une étape (F30) de comparaison du score (SC) du message à évaluer (MSGEv) avec ledit seuil (TH$_j$) pour décider, si le message à évaluer (MSGEv) est une anomalie, ledit procédé étant **caractérisé en ce que** la fonction (SCR$_j$) utilise, pour attribuer ledit score (SC) audit message à évaluer, une moyenne généralisée d'ordre inférieur à 1 appliquée aux composantes du vecteur (VPj) correspondant aux N-grammes de ce message à évaluer (MSGEv).

9. Procédé de détection d'anomalie selon la revendication 8 **caractérisé en ce qu'**il comporte une étape (F40) d'enregistrement de ladite anomalie ou de génération d'une alerte.

10. Procédé selon l'une quelconque des revendications 1 à 9 dans lequel, le seuil est défini (E30) :

- à partir du score (SC) le plus faible attribué auxdits messages (MSGAa$_j$) de la base d'apprentissage (BAj), lorsque ladite fonction (SCR$_j$) discrimine les scores des anomalies en leur attribuant des valeurs faibles ; valeurs ou
- à partir du score (SC) le plus fort attribué auxdits messages (MSGAa$_j$) de la base d'apprentissage (BA$_j$), lorsque ladite fonction (SCR$_j$) discrimine les scores des anomalies en leur attribuant des valeurs élevées.

11. Dispositif de création d'un modèle (M$_j$) permettant de détecter si un message à évaluer (MSGEv) constitué de symboles (C$_i$) susceptible d'être reçu par une application (AP$_j$) constitue une anomalie, ce dispositif comportant :

- un module (M10) d'obtention d'un ensemble de messages (MSGAa$_j$) appartenant à une classe de référence (CR$_j$) propre à l'application (AP$_j$) pour constituer une base d'apprentissage (BA$_j$) ;
- un module (M20) d'identification de l'ensemble des N-grammes (NG$_{k,j}$) des messages (MSGAa$_j$) de la base d'apprentissage (BAj) ;
- un module (M20) de génération d'un vecteur (VP$_j$) du modèle (M$_j$), ce vecteur (VPj) associant :

- à chacun desdits N-grammes, une valeur représentant une probabilité (pb$_{k,j}$) d'occurrence dudit N-gramme (NG$_{k,j}$) dans la base d'apprentissage (BA$_j$) ; et
- une valeur (vbd$_j$) par défaut aux N-grammes (NG) qui n'appartiennent pas aux messages (MSGAa$_j$) de la base d'apprentissage (BA$_j$) ;

ledit dispositif comportant en outre :

- un module (M30) de définition d'une fonction permettant d'attribuer un score (SC) à un message (MSGEv) à évaluer à partir des valeurs du vecteur (VPj) associées aux N-grammes dudit message à évaluer (MSGEv) cette fonction étant choisie pour discriminer les scores des anomalies par rapport aux scores des messages normalement attendus en comparant ces scores à un seuil (TH$_j$) défini pour cette fonction;

ledit message (MSGEv) à évaluer étant considéré ou non comme une anomalie en fonction du résultat de la comparaison dudit score (SC) attribué à ce message avec ledit seuil (TH$_j$), ledit dispositif étant **caractérisé en ce que** la fonction (SCR$_j$) utilise, pour attribuer ledit score (SC) audit message à évaluer, une moyenne généralisée d'ordre inférieur à 1 appliquée aux composantes du vecteur (VPj) correspondant aux N-grammes de ce message à évaluer (MSGEv).

12. Dispositif de détection d'anomalie permettant de déterminer si un message (MSGEv) à évaluer constitué de symboles (Ci) et susceptible d'être reçu par une application (AP$_j$) constitue une anomalie, ce dispositif comportant :

- un module (G10) d'extraction des N-grammes (NG$_k$) de ce message à évaluer ;
- un module (G20) d'attribution d'un score (SC) au message à évaluer (MSGEv) à partir d'un vecteur (VP$_j$) et des N-grammes du message (MSGEv) à évaluer, ce vecteur (VP$_j$) associant à chacun des N-grammes de l'ensemble des messages d'une base d'apprentissage (BA$_j$) d'une classe de référence (CR$_j$), une valeur correspondant à une probabilité d'occurrence de ce N-gramme dans ladite base d'apprentissage (BA$_j$), et une valeur par défaut (vbd$_j$) aux N-grammes qui n'appartiennent pas aux messages (MSGAa$_j$) de la base d'apprentissage (BA$_j$), ledit score (SC) étant attribué par une fonction choisie pour discriminer les scores des anomalies par rapport aux scores des messages normalement attendus par ladite application, en comparant ces scores par rapport à un seuil (TH$_j$) défini pour cette fonction ; et
- un module (G30) de comparaison du score (SC) du message à évaluer (MSGEv) avec ledit seuil (TH$_j$) pour décider si le message à évaluer (MSGEv) est une anomalie, ledit dispositif étant **caractérisé en ce que** la fonction (SCR$_j$) utilise, pour attribuer ledit score (SC) audit message à évaluer, une moyenne généralisée d'ordre inférieur à 1 appliquée aux composantes du vecteur (VPj) correspondant aux N-grammes de ce message à évaluer (MSGEv).

13. Programme d'ordinateur comportant des instructions pour l'exécution des étapes du procédé de création de modèle selon l'une quelconque des revendications 1 à 7 et 10 lorsque ledit programme est exécuté par un ordinateur.

14. Programme d'ordinateur comportant des instructions pour l'exécution des étapes du procédé de détection d'anomalie selon l'une quelconque des revendications 8 ou 10 lorsque ledit programme est exécuté par un ordinateur.

15. Support d'enregistrement lisible par un ordinateur sur lequel est enregistré un programme d'ordinateur comprenant des instructions pour l'exécution des étapes du procédé de création de modèle selon l'une quelconque des revendications 1 à 7 et 10.

16. Support d'enregistrement lisible par un ordinateur sur lequel est enregistré un programme d'ordinateur comprenant des instructions pour l'exécution des étapes du procédé de de détection d'anomalie selon l'une quelconque des revendications 8 à 10.

# a b b c d a b d    FIG.1

$C_i$    MSG

FIG.2

E10 — Obtention $MSGA_j$

$MSGAa_j$ → $BA_j$

$MSGAt_j$ → $BT_j$

E11 — Obtention $MSGNA_j$ → $BTNA_j$

E15 — Identification des N-grammes

E24 — Calcul des probabilités des N-grammes

E20

E26 — Probabilité par défaut

$VP_j$

$M_j$

E30 — Définition de la fonction $SCR_j$

$SCR_j$

E40 — Définition d'un seuil $TH_j$

$TH_j$

| $VPC_1$ | $VPC_2$ | ..... | $VPC_Q$ | VPC0 |
|---------|---------|-------|---------|------|
| $pb_1$ | $pb_2$ | ..... | $pb_Q$ | $vbd_j$ |

$VP_j$

Q éléments

FIG.3

MSGEv → Extraction des N-grammes ~ F10

SCR$_j$ / VP$_j$ / TH$_j$ → M$_j$

Attribution score ~ F20

F30 — SC < TH$_j$ — non / oui

F35 — MSGE$_v$ attendu par AP$_j$

MSGE$_v$ = anomalie ~ F33

log ~ F40

FIG.4

E26 ~

vbd = p$_{min}$ ~ E261

BT$_j$ — MSGAt$_j$

MSGt$_j$ = anomalie ? ~ E262

TFP(vbd) ~ E263

B2 — nmut = 1 ~ E274

MSGt$_j^{*,nmut}$ ~ E275

MSGt$_j^{*,nmut}$ = anomalie ? ~ E276

B3 — TD(nmut*, vbd) ~ E277

TD$_{conf}$ ⇒ nmut$_{min}$ ~ E278

vbd — {TFP, nmut$_{min}$} ~ E279

CU — vbd$_j$ ~ E2710

FIG.7

E26

| vbd=p$_{min}$ | E261 |

BT$_j$ —— MSGAt$_j$

| MSGt$_j$ =anomalie ? | E262 |

| TFP(vbd) | E263 |

B1

BTNA$_j$ —— MSGNA$_j$

| MSGNA$_j$=anomalie ? | E266 |

| TD(vbd) | E267 |

| vbd →{TFP,TD} | E269 |

| CU → vbd$_j$ | E2610 |

FIG.5

FIG.6

FIG.8-1

FIG.8-2

FIG.8-3

P3

1.00

$TD_{conf} = 1$
$nmut_{min} = 20$

vbd₃

TD

0

0     Mutations     80

FIG.8-4

P4

1.00

$TD_{conf} = 1$
$nmut_{min} = 25$

vbd₄

TD

0

0     Mutations     80

FIG.8-5

FIG.8-6

## FIG.8-7

P7

1.00

TD

$TD_{conf} = 1$
$nmut_{min} = 50$

$vbd_7$

0

0    Mutations    80

## FIG.8-8

P8

1.00

TD

$TD_{conf} = 1$
$nmut_{min} = 60$

$vbd_8$

0

0    Mutations    80

## FIG.8-9

## FIG.9

FIG.10

FIG.11

FIG.12

FIG.13

FIG.14

FIG.15

Europäisches
Patentamt

European
Patent Office

Office européen
des brevets

**RAPPORT DE RECHERCHE EUROPEENNE**

Numéro de la demande

EP 21 16 8667

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WANG K ET AL: "Anomalous Payload-Based Network Intrusion Detection", RECENT ADVANCES IN INTRUSION DETECTION. 7TH INTERNATIONAL SYMPOSIUM, RAID 2004. PROCEEDINGS - 15-17 SEPT. 2004 - SOPHIA ANTIPOLIS, FRANCE; [LECTURE NOTES IN COMPUT. SCI. VOL.3224], SPRINGER-VERLAG, BERLIN, GERMANY, vol. 3224, 15 septembre 2004 (2004-09-15), pages 203-222, XP002605194, ISBN: 978-3-540-23123-3 [extrait le 2004-09-17] * abrégé * * page 203 - page 210 * ----- | 1-16 | INV. G06F21/55 H04L29/06 |
| A | US 8 225 402 B1 (AVERBUCH AMIR [IL] ET AL) 17 juillet 2012 (2012-07-17) * colonne 5, ligne 55 - colonne 9, ligne 55 * * figures 2-4 * ----- | 1-16 | |
| | | | DOMAINES TECHNIQUES RECHERCHES (IPC) |
| | | | G06F H04L |

Le présent rapport a été établi pour toutes les revendications

| Lieu de la recherche | Date d'achèvement de la recherche | Examinateur |
|---|---|---|
| La Haye | 27 mai 2021 | Segura, Gustavo |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...........................................................................
& : membre de la même famille, document correspondant

EPO FORM 1503 03.82 (P04C02)

25

## ANNEXE AU RAPPORT DE RECHERCHE EUROPEENNE
## RELATIF A LA DEMANDE DE BREVET EUROPEEN NO.

EP 21 16 8667

La présente annexe indique les membres de la famille de brevets relatifs aux documents brevets cités dans le rapport de recherche européenne visé ci-dessus.

Lesdits members sont contenus au fichier informatique de l'Office européen des brevets à la date du

Les renseignements fournis sont donnés à titre indicatif et n'engagent pas la responsabilité de l'Office européen des brevets.

27-05-2021

| Document brevet cité au rapport de recherche | Date de publication | Membre(s) de la famille de brevet(s) | Date de publication |
|---|---|---|---|
| US 8225402 B1 | 17-07-2012 | AUCUN | |

EPO FORM P0460

Pour tout renseignement concernant cette annexe : voir Journal Officiel de l'Office européen des brevets, No.12/82